# FASCICULE DE BREVET EUROPEEN

(11) **EP 3 016 995 B1**
(45) Date de publication et mention de la délivrance du brevet: **12.07.2017**
(21) Numéro de dépôt: 14734802.3
(22) Date de dépôt: 30.06.2014
(51) Int. Cl.: C08G 77/442, C09J 7/02, C08L 23/04, C08L 83/10, C08L 23/10

(54) **FILM DE POLYOLEFINE PRESENTANT DES PROPRIETES DE SURFACES ANTIADHERENTES**
POLYOLEFINFOLIE MIT NICHT ANEINANDERHAFTENDEN OBERFLÄCHENEIGENSCHAFTEN
POLYOLEFIN FILM WITH NON-STICK SURFACE PROPERTIES

(30) Priorité: 01.07.2013 FR 1301557
(43) Date de publication de la demande: 11.05.2016
(73) Titulaire: Societe des Polymeres Techniques, 76450 Cany-Barville (FR)
(72) Inventeur: GIRODET, Laurent, F-76760 Saint Martin aux Arbres (FR)
(74) Mandataire: Hirsch & Associés
(86) Numéro de dépôt international: PCT/EP2014/063859
(87) Numéro de publication internationale: WO 2015/000851

(56) Documents cités:
- EP-A1- 1 533 339
- JP-A- 2006 206 844

## Description

### DOMAINE TECHNIQUE

L'invention se rapporte au domaine technique des films plastiques présentant des propriétés de surfaces anti-adhérentes ainsi qu'aux procédés permettant leur fabrication.

### ART ANTERIEUR

Il est connu d'utiliser des étiquettes auto-adhésives à des fins de présentation d'une information, telle qu'un prix, une dénomination ou un code barres, ou à des fins décoratives. Ces étiquettes comprennent généralement une couche support imprimable, transparente ou non, dont une des faces est revêtue d'une couche d'adhésif, et une couche protectrice adjacente à la couche d'adhésif. La couche d'adhésif est constituée d'une substance conférant à la couche support imprimable un pouvoir collant immédiat à température ambiante (souvent désigné sous le terme de « tack »), lequel permet l'adhésion instantanée de la couche support imprimable à un produit sous l'effet d'une brève et légère pression.

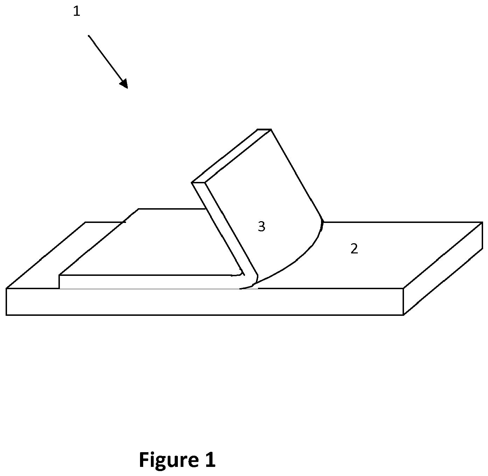

La structure d'une étiquette auto-adhésive est représentée schématiquement à la figure 1. Une telle étiquette (1) comprend une couche support (3) sur laquelle peut être imprimée une information ou un motif décoratif et une couche protectrice (2) (désignée en anglais par le terme de « release liner »). La couche support imprimable se décolle aisément de la couche protectrice juste avant son application sur la surface d'un objet, tel qu'un emballage ou un récipient par exemple en verre ou en matière plastique. La couche protectrice peut être constituée d'un film de papier ou d'un film de polymère, par exemple un polyester ou une polyoléfine. Un film de polymère offre une meilleure solidité par rapport à un film de papier.

La surface de la couche protectrice qui fait face à la couche support imprimable présente généralement des propriétés anti-adhérentes qui facilitent un décollement rapide et uniforme de la couche support imprimable. Tel est le cas par exemple de la couche protectrice employée dans la fabrication d'un carnet de timbres auto-adhésifs. Chaque timbre constitue une couche support imprimable qui adhère à une couche protectrice dont la surface possède des propriétés anti-adhérentes.

Il est connu de conférer des propriétés de surface anti-adhérentes en appliquant sur la surface de la couche protectrice un film de polysiloxane, encore appelé silicone, de quelques microns d'épaisseur. Un polysiloxane est un polymère formé d'une chaîne principale inorganique constituée d'une répétition de liaisons siloxanes (...-Si-O-Si-...). Des groupes organiques peuvent être liés soit aux atomes de silicium et former ainsi une chaîne latérale, soit aux atomes de silicium situés aux extrémités de la chaîne principale. Le silicone le plus courant est le poly(diméthylsiloxane) linéaire ou PDMS, dans lequel deux groupements méthyles sont liés à un atome de silicium de la chaîne principale comme illustré ci-après.

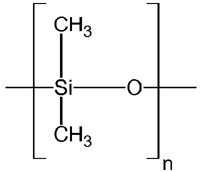

La couche protectrice recouverte d'un film de silicone anti-adhérent peut être fabriquée par un procédé comprenant les deux étapes suivantes :
- fabrication d'un film soit par un procédé papetier, soit par un procédé d'extrusion de film dans le cas d'un film en matière plastique ;
- enduction de l'une des faces du film par une matière siliconée, l'épaisseur de la couche de matière siliconée étant généralement de l'ordre du micron d'épaisseur. Les silicones de la gamme « TEGO^{®} RC-silicones » commercialisés par la société EVONIK peuvent être utilisés comme matière siliconée dans ce procédé à deux étapes.

L'une des limitations de ce procédé provient de l'absence de flexibilité concernant le choix du film support. Il est difficile de gérer un stock comprenant un grand nombre de références de films ; ces films peuvent en effet varier selon leur teinte, leur épaisseur, leur touché, leurs propriétés mécaniques, leurs propriétés d'aspect.

Une autre limitation provient de l'impossibilité de réaliser des petites séries en raison de la forte inertie des systèmes d'enduction. En effet, les dispositifs utilisés pour l'enduction du film sont complexes à régler en raison de la faible épaisseur de la couche de matière siliconée (0,5 à 2 µm après évaporation éventuelle du solvant). Ces dispositifs nécessitent souvent des équipements thermiques pour déposer la matière siliconée, évaporer le solvant éventuel et réticuler la matière siliconée.

Un procédé alternatif développé par la société Coating Plasma Industrie consiste à greffer chimiquement du silicone à la surface d'un film en utilisant la technique plasma. On fait passer le film dans une enceinte où règne un environnement de « plasma froid » contenant un gaz constitué de molécules de silicone. Sous l'effet de l'excitation plasma, la surface du film et le gaz sont chimiquement activés et leur recombinaison conduit au greffage de silicone en surface. Ce procédé est inadapté aux faibles volumes de film à produire et pour des films dont la largeur est variable. Ce procédé est décrit sur le site http://www.cpi-plasma.com/pdf/cpi_fr.pdf.

Un autre procédé alternatif consiste à incorporer un concentré d'additifs à base de silicone, encore appelé «masterbatch», dans un film de polymère lors de son extrusion. Le mélange maître est utilisé en dilution dans le polymère. Or, on a observé une propension du silicone à migrer de la couche protectrice vers la couche d'adhésif, ce qui a pour conséquence de dégrader les propriétés adhésives de la couche imprimable.

On recherche donc un procédé de fabrication permettant de s'affranchir de l'étape d'enduction d'une matière siliconée sur le film. De préférence, on recherche un film plastique possédant des propriétés de surface anti-adhérentes au moins équivalentes à celles d'un film plastique dont la surface est enduite de silicone.

### RESUME DE L'INVENTION

A cet effet, l'invention propose une composition comprenant :
a) un copolymère bloc comprenant au moins un bloc d'un polysiloxane et au moins un bloc d'une polyoléfine ;
b) un polysiloxane fonctionnalisé par des groupements susceptibles de réagir par polymérisation radicalaire ;
c) un amorceur de polymérisation radicalaire ou photoinitiateur, activable par rayonnement UV
d) une polyoléfine.

Selon différentes formes de réalisation de l'invention, ladite composition peut en outre satisfaire à une ou plusieurs des conditions suivantes:
- les groupements susceptibles de réagir par polymérisation radicalaire sont choisis parmi les groupements vinyle, acrylate et époxyde alicylique.
- le polysiloxane consiste en polydiméthylsiloxane
- la polyoléfine d) représente au moins 5% en poids de la composition, de préférence au moins 50%, de préférence encore au moins 90%.
- la polyoléfine d) est choisie dans le groupe consistant le polyéthylène, le polypropylène, les copolymères de polyéthylène et de polypropylène et les mélanges de ceux-ci.
- le copolymère bloc présente une structure dibloc A-B dans laquelle A représente le bloc de polyoléfine et un B représente le bloc de polysiloxane.
- le copolymère bloc présente une structure en peigne dans laquelle le copolymère comprend une chaîne principale de polyoléfine et des chaînes latérales de polysiloxane.

Cette composition peut être extrudée et étirée pour former un film qui, après avoir été soumis à un rayonnement UV, présente des propriétés de surface anti-adhérentes et peut donc servir avantageusement de support d'une étiquette auto-adhésive.

L'invention a également pour objet un procédé de fabrication de la composition telle que décrite ci-dessus. Il comprend les étapes de :
a) préparation d'un agent compatibilisant par réaction entre :
   i) un polysiloxane monofonctionnalisé par un groupement choisi parmi les groupements hydroxyle, vinyle, amine, aminoalkyle, époxyde, époxyde alicyclique, acrylate, mercapto ; et
   ii) soit α) une polyoléfine réactive, soit β) une polyoléfine non réactive en mélange avec un peroxyde ;
b) mélange de l'agent compatibilisant avec
   (i) un polysiloxane fonctionnalisé par des groupements susceptibles de réagir par polymérisation radicalaire;
   (ii) un amorceur de polymérisation radicalaire ou photoinitiateur, activé par rayonnement UV
   (iii) une polyoléfine.

Suivant une forme de réalisation du procédé de fabrication selon la présente invention précité, la polyoléfine réactive de l'étape a) ii) α) précitée est une polyoléfine greffée par des groupements anhydride maléique.

Suivant une autre forme de réalisation du procédé de fabrication selon la présente invention précité, dans l'étape a) ii) β) précitée, une polyoléfine non greffée est mise en contact avec un peroxyde, de préférence un dialkyle-péroxyde, en particulier le 2,5-dimétyl-2,5-di(tert-butylperoxy)hexane.

L'invention a également pour objet un procédé de fabrication d'un film comprenant les étapes de :
a) approvisionnement de la composition telle que décrite ci-dessus ou préparation de ladite composition selon le procédé tel que décrit ci-dessus ;
b) extrusion de la composition pour former un film;
c) étirement du film ;
d) exposition du film à un rayonnement UV.

Selon un mode de réalisation du procédé selon la présente invention précité, on incorpore à la composition après l'étape a) une polyoléfine.

Selon un autre mode de réalisation du procédé selon la présente invention précité, les étapes d'extrusion et d'étirement sont effectuées par un procédé d'extrusion gonflage.

Selon un autre mode de réalisation du procédé selon la présente invention précité, les étapes d'extrusion et d'étirement sont effectuées par un procédé d'extrusion de film à plat.

L'invention a donc également pour objet un film de polyoléfine obtenu par extrusion, étirement et exposition à un rayonnement UV de la composition selon l'invention.

L'invention a également pour objet une étiquette auto-adhésive (1) comprenant une couche support (3) et une couche protectrice (2) comprenant le film selon l'invention.

L'invention repose sur la découverte qu'il est possible, grâce à l'utilisation d'un agent compatibilisant, de stabiliser un polysiloxane dans une matrice de polyoléfine, puis de provoquer la réticulation du polysiloxane ainsi stabilisé, par exposition à un rayonnement UV.

Le procédé de fabrication selon l'invention permet de s'affranchir de l'étape d'enduction du support par une matière à base de polysiloxane. Il permet de conférer des propriétés anti-adhérentes au film dès son extrusion. Il est donc plus simple que les procédés de l'art antérieur.

### BREVE DESCRIPTION DES FIGURES

La Figure 1 représente une étiquette auto-adhésive (1) comprenant une couche support (3) sur laquelle peut être imprimée une information ou un motif décoratif et une couche protectrice (2) (ou « release liner »). La surface de la couche support imprimable en contact avec la couche protectrice est recouverte d'une couche d'un adhésif sensible à la pression. La couche protectrice comprend le film selon l'invention.
La Figure 2 représente la formule chimique générique du polyéthylène greffé par de l'anhydride maléique (a) et du polypropylène greffé par de l'anhydride maléique (b).

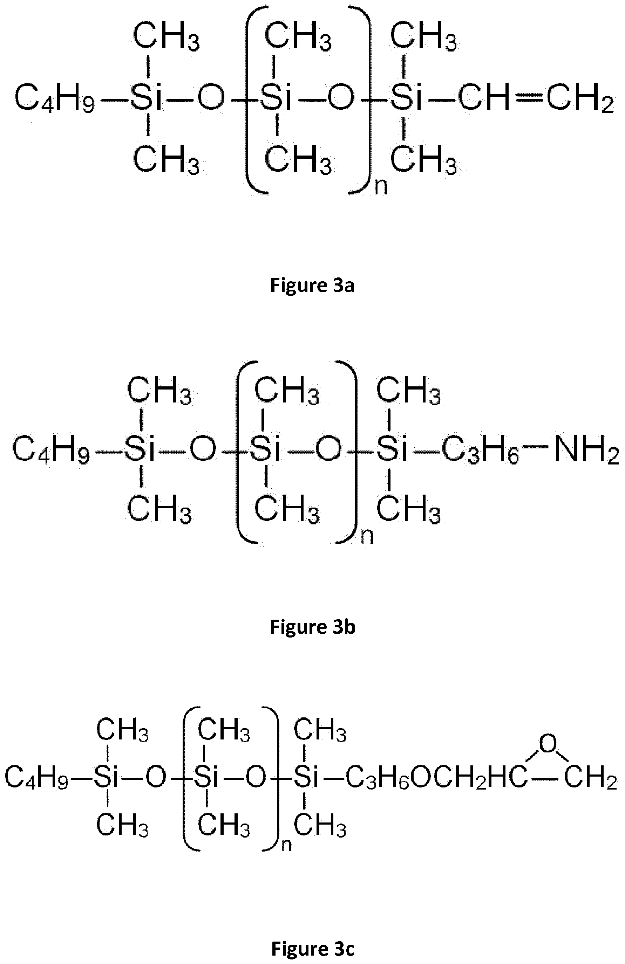

La Figure 3 représente les formules chimiques d'exemples de polydiméthylsiloxanes mono fonctionnalisés par :
   - une fonction terminale vinyle (Figure 3a),
   - une fonction terminale aminopropyle (Figure 3b) et
   - une fonction terminale époxyde (Figure 3c).

### DESCRIPTION DES MODES DE REALISATION DE L'INVENTION

La première étape du procédé est la fabrication de l'agent compatibilisant. En effet, une polyoléfine et un polysiloxane sont des polymères incompatibles ; leur mélange conduit à une composition ne présentant pas une structure homogène et continue. C'est pourquoi on utilise un agent compatibilisant qui rend le polysiloxane compatible avec la polyoléfine. En l'absence d'agent compatibilisant, on observerait la démixtion des deux phases de polysiloxane et de polyoléfine.

L'agent compatibilisant choisi selon la présente invention est un copolymère bloc comprenant au moins un bloc de polyoléfine symbolisé (A) et au moins un bloc de polysiloxane symbolisé (B). Cette structure en blocs permet avantageusement de stabiliser une dispersion de polysiloxane dans une matrice de polyoléfine. En effet, le bloc de polyoléfine de l'agent compatibilisant est compatible avec des chaînes polymériques de polyoléfine et le bloc de polysiloxane est compatible avec des chaînes polymériques de polysiloxane. On entend par copolymère bloc un polymère comprenant au moins deux sous-unités constituées chacune d'un homopolymère, ces sous-unités étant liées entre elles par des liaisons covalentes. On entend par homopolymère un polymère issu de la polymérisation de plusieurs unités monomériques identiques. Un copolymère bloc constitué de deux blocs distincts (de type A-B) est dénommé par le terme de copolymère dibloc. Les copolymères comprenant une chaîne principale constituée d'un premier type de bloc sur laquelle sont greffées des chaînes latérales constituées chacune d'un second type de bloc sont dénommés copolymère de type peigne.

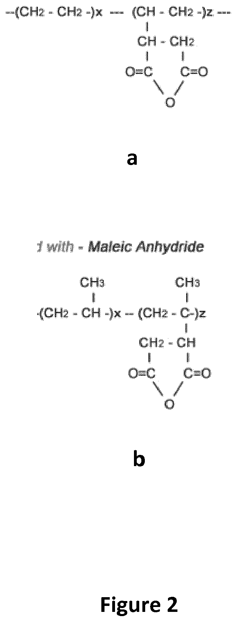

L'agent compatibilisant peut être obtenu par les deux méthodes suivantes :
a) Dans une première méthode, on fait réagir une polyoléfine greffée par des groupements réactifs avec un polysiloxane mono fonctionnalisé par un groupement réactif. Différents types de polysiloxanes monofonctionnalisés peuvent aussi réagir sur une polyoléfine réactive. Idéalement, toutes les fonctions réactives de la polyoléfine réagissent sur une molécule de polysiloxane mono fonctionnalisée.
   La température du mélange réactionnel est choisie de façon à diminuer la viscosité de la polyoléfine pour la rendre malléable tout en évitant sa décomposition. Le mélange de la polyoléfine greffée et du polysiloxane mono fonctionnalisé peut par exemple être effectué à une température comprise entre 100 et 280°C. De préférence, la polyoléfine a un indice de fluidité (Melt Index) compris entre 0,3 et 100 g/10 min, et le polysiloxane est sous forme d'une huile présentant une viscosité comprise entre 10 et 200 000 cSt.
   La polyoléfine peut être choisie dans le groupe comprenant le polyéthylène, le polypropylène, les copolymères de polyéthylène et de polypropylène, et les mélanges de ceux-ci. Elle est greffée par exemple par des groupements anhydride maléique. Une telle polyoléfine est disponible commercialement auprès de la société ARKEMA sous la dénomination commerciale OREVAC^{®} ou auprès de la société AUSERPOLIMERI sous la dénomination commerciale COMPOLINE^{®}. La formule chimique générique du polyéthylène greffé par de l'anhydride maléique et du polypropylène greffé par de l'anhydride maléique est représentée Figure 2.
   Un polysiloxane dans lequel des groupements organiques fonctionnels sont liés aux atomes de silicium de la chaîne principale est dénommé polysiloxane modifié ou fonctionnalisé ou encore greffé. Selon l'invention, le polysiloxane est monofonctionnalisé, c'est-à-dire qu'il ne comporte qu'un groupement organique fonctionnel par molécule de polysiloxane. Les groupements organiques jouent le rôle de fonctions réactives susceptibles de réagir chimiquement avec une polyoléfine greffée. Dans ce mode de préparation, le groupement organique présent sur le polysiloxane peut être choisi parmi les groupements hydroxyle, amine, aminoalkyle, mercapto, époxyde encore dénommé glycidyl éther ou les groupements époxyde alicylique.
   Dans un mode de réalisation préféré, le groupement aminoalkyle est un groupement aminopropyle. Des polysiloxanes comportant un groupement terminal aminoalkyle sont disponibles auprès de la société GELEST.
   Dans un autre mode de réalisation préféré, on utilise des molécules de polysiloxane comportant un groupement époxyde ou un groupement acrylate qui sont commercialisées par la société EVONIK sous la dénomination commerciale « TEGO^{®} RC Silicones ». Lorsque le polysiloxane est fonctionnalisé par un groupement hydroxyle ou amine, il se forme respectivement des liaisons ester et amide entre la polyoléfine greffée anhydride maléïque et le polysiloxane.
b) Dans une seconde méthode, on fait réagir une polyoléfine non greffée avec un polysiloxane monofonctionnalisé par un groupement réactif, en présence d'un peroxyde, tel que les dialkyle-péroxydes, par exemple le 2,5-dimétyl-2,5-di(tert-butylperoxy)hexane). La température du mélange réactionnel est choisie de façon à diminuer la viscosité de la polyoléfine pour la rendre malléable tout en maitrisant la réaction de greffage. Le mélange de la polyoléfine et du polysiloxane greffé peut par exemple être effectué à une température comprise entre 100 et 280°C. De préférence, la polyoléfine a un indice de fluidité (Melt Index) compris entre 0,3 et 100 g/10 min et le polysiloxane est sous forme d'une huile présentant une viscosité comprise entre 10 et 200 000 cSt.

La présence de peroxyde dans le mélange réactionnel assure le greffage du polysiloxane fonctionnalisé sur la polyoléfine. La polyoléfine peut être choisie dans le groupe consistant en le polyéthylène, le polypropylène, les copolymères de polyéthylène et de polypropylène et les mélanges de ceux-ci. Dans ce mode de préparation, le groupement réactif présent sur le polysiloxane peut être choisi parmi les groupements vinyle, acrylate, ou époxyde alicylique.

Les deux méthodes de préparation décrites ci-dessus conduisent à un copolymère bloc pouvant présenter une structure dibloc ou de peigne en fonction du choix des matières de base.

Dans un mode de réalisation de l'invention, le copolymère présente une structure peigne. Il peut par exemple être obtenu en faisant réagir un polyéthylène greffé par de l'anhydride maléique avec un polysiloxane monofonctionnalisé dont le groupement organique fonctionnel est par exemple lié à un atome de silicium en position terminale de la chaîne polysiloxane.

Dans un mode de réalisation préféré, le polysiloxane est monofonctionnalisé par un groupe vinyle.

De préférence, on effectue le mélange dans une extrudeuse double vis. L'extrudeuse double vis développe suffisamment de forces de cisaillement pour obtenir un mélange intime des deux polymères et la formation de liaisons covalentes entre le polysiloxane fonctionnalisé et la polyoléfine réactive. L'agent compatibilisant ainsi obtenu est de préférence transformé en granulés à la sortie de l'extrudeuse.

La seconde étape du procédé est la fabrication d'un mélange maître. On mélange l'agent compatibilisant obtenu dans la première étape avec :
- un polysiloxane comprenant des groupements réactifs qui permettront, pendant la 3^{ème} étape du procédé, la réticulation du polysiloxane sous l'effet d'un rayonnement UV ;
- une polyoléfine pouvant être différente de celle utilisée dans la fabrication de l'agent compatibilisant ;
- un amorceur de polymérisation radicalaire, activable par rayonnement UV.

Pour que le rayonnement UV provoque ultérieurement la réticulation du polysiloxane, le polysiloxane comporte des groupements réactifs qui induisent sa réticulation sous l'action de la décomposition par les UV de l'amorceur de polymérisation. On peut citer comme groupements réactifs aux UV les groupements vinyle, acrylates et époxyde alicyclique, tel que les groupements époxyde cyclohexyle. Des polysiloxanes fonctionnalisés par des groupements réactifs aux UV sont disponibles commercialement auprès des sociétés EVONIK, SHIN ETSU, BLUE STAR SILICONE et GELEST. On peut citer comme amorceur de polymérisation radicalaire activé par le rayonnement UV le benzophénone, les α-dialkoxy-acéto-phénone ou α -hydroxy-alkyl-phénone ou α -amino-alkyl-phénone.

On effectue un compoundage du mélange. Le compoundage est un processus permettant le mélange de matières plastiques à l'état fondu avec divers additifs. Le compoundage de l'agent compatibilisant, du polysiloxane réactif aux UV et de polyoléfine permet d'obtenir un mélange maître. Ce mélange maître, encore appelé « concentré d'additifs », est un concentré de polysiloxane réactif aux UV stabilisé dans une matrice de polyoléfine grâce à la présence de l'agent compatibilisant obtenu au cours de la première étape du procédé. Il se présente sous la forme d'une dispersion de polysiloxane réactif aux UV dans une matrice de polyoléfine. Le terme de matrice signifie que la polyoléfine sert de support aux inclusions de polysiloxane réactif, celles-ci étant noyées dans la polyoléfine. Le mélange maître est de préférence transformé en granulés. La proportion en poids de polysiloxane comportant des groupements réactifs aux UV peut représenter de 1 à 95% par rapport au poids du mélange maître, de préférence entre 20 et 60%, de préférence encore de 45 à 55%, le complément étant essentiellement constitué de polyoléfine et de l'agent compatibilisant.

De préférence, on effectue le mélange dans un comalaxeur, par exemple de type BUSS. Ce matériel permet de mélanger intimement chacun des constituants, sans générer trop de cisaillement susceptible de déstabiliser la dispersion du polysiloxane.

Dans la troisième étape du procédé, on extrude le mélange maître, après que celui-ci ait été éventuellement mélangé avec une polyoléfine, pour former un film. La polyoléfine éventuellement utilisée peut être différente de celles utilisées dans la première et seconde étape du procédé. Le mélange est porté à une température suffisante pour permettre sa fusion. Le mélange à l'état fondu est ensuite extrudé puis étiré. L'étape d'extrusion soumet le mélange à des forces de cisaillement qui provoquent une montée en température de celui-ci et contribuent à l'obtention d'un mélange intime entre les constituants.

L'étape d'extrusion-étirement du film peut être réalisée par le procédé connu d'extrusion-gonflage. Dans ce procédé, le mélange de granulés est versé dans une trémie pour alimenter la vis de l'extrudeuse. Dans l'extrudeuse, il est chauffé et ramolli grâce à une vis sans fin qui se trouve dans un tube chauffé pour rendre le mélange malléable. La vis entraîne le mélange vers une filière annulaire.

En sortie de la filière annulaire, on insuffle de l'air de manière à faire se gonfler et s'élever verticalement une longue bulle de film. Après refroidissement, des rouleaux aplatissent le film en une gaine plane qui s'enroule sur des bobines. L'étirement du film est obtenu par injection d'air dans le film encore à l'état liquide. Dans ce procédé, l'étirement du film se fait dans la direction de défilement du film et également dans la direction perpendiculaire à la direction de défilement du film.

L'étape d'extrusion-étirement du film peut encore être réalisée par le procédé connu d'« extrusion-cast » encore appelé « extrusion à plat » dans lequel le mélange de granulés est versé dans une trémie pour alimenter la vis de l'extrudeuse. Dans l'extrudeuse, il est chauffé et ramolli, grâce à une vis sans fin qui se trouve dans un tube chauffé pour rendre le mélange malléable. La vis entraîne le mélange vers une filière plate.

En sortie de la filière plate, le mélange passe sur au moins deux rouleaux. En augmentant la vitesse de rotation d'un premier rouleau par rapport à celle d'un second rouleau placé en amont du premier rouleau, on provoque un étirement unidirectionnel du film dans la direction de défilement du film. L'étirement est obtenu par réglage de la différence de vitesses entre deux rouleaux successifs.

Dans les deux procédés de transformation du mélange décrits ci-dessus, le film après extrusion est étiré à l'état liquide.

Le film obtenu présente généralement une épaisseur comprise entre 20 et 100 microns, de préférence entre 25 et 60 microns. Le Demandeur a observé la migration du polysiloxane vers la surface du film au cours de l'étape d'extrusion-étirement. La démixtion partielle du polysiloxane et de la polyoléfine facilite la formation d'une couche de molécules de polysiloxane à la surface du film. Sans vouloir être lié par la théorie, le Demandeur est d'avis que l'étape d'étirement du film créée une rupture de la cohésion de la dispersion de polysiloxane dans la matrice de polyoléfine. Cette rupture créée une démixtion qui s'accompagne d'une migration du polysiloxane vers la surface du film.

Lorsque le film est formé, on l'irradie par un rayonnement UV par une technique connue de l'homme du métier. Ce rayonnement induit la décomposition de l'amorceur de polymérisation radicalaire qui va lui-même déclencher la polymérisation des groupements réactifs présents sur les molécules de polysiloxane et créer ainsi une couche de polysiloxane de forte cohésion et de forte adhérence sur le film en raison de la présence de l'agent compatibilisant élaboré lors de la première étape. C'est le polysiloxane qui va conférer au film de polyoléfine ses propriétés de surface non adhérentes. Des dispositifs de réticulation sont disponibles commercialement auprès de la société IST. Ils peuvent être disposés directement en sortie du procédé d'extrusion-étirement du film.

La technique de spectrométrie photoélectronique X, encore appelée spectrométrie de photoélectrons induits par rayons X (en anglais, « X-Ray photoelectron spectrometry : XPS ») anciennement nommée ESCA (« electron spectroscopy for chemical analysis » : spectroscopie d'électron pour l'analyse chimique) permet de déterminer la composition chimique de la surface du film. Elle permet de différencier la polyoléfine du polysiloxane. Elle permet de confirmer la migration des chaînes polysiloxanes après extrusion-étirement du film vers la surface du film. Elle permet également de mesurer la quantité de polysiloxane à la surface du film.

La technique de tensiométrie dynamique permet également de confirmer la présence de silicone à l'extrême surface du film, par la mesure de l'angle de contact de l'eau à l'avancée et au recul du film dans ce liquide.

Enfin, l'application d'un adhésif standardisé à la surface du film, par exemple TESA 7475, permet de mesurer l'anti-adhérence obtenue et de confirmer l'absence de migration de silicone sur l'adhésif.

Le film obtenu est de préférence utilisé dans les applications étiquettes, rubans adhésifs, films pour les arts graphiques (supports publicitaires, information). L'avantage du procédé selon l'invention est qu'il permet par les seules étapes d'extrusion et d'étirement d'obtenir un film présentant des propriétés de surface non adhérentes alors que le procédé de fabrication d'un film non adhérent de l'art antérieur requiert après les étapes d'extrusion et d'étirement, une étape ultérieure d'enduction du film obtenu.

## Revendications

1. Composition comprenant :
a) un copolymère bloc comprenant au moins un bloc d'un polysiloxane et au moins un bloc d'une polyoléfine ;
b) un polysiloxane fonctionnalisé par des groupements susceptibles de réagir par polymérisation radicalaire;
c) un amorceur de polymérisation radicalaire, activable par rayonnement UV ;
d) une polyoléfine.

2. Composition selon la revendication 1, dans laquelle les groupements susceptibles de réagir par polymérisation radicalaire sont choisis parmi les groupements vinyle, acrylate et époxyde alicylique.

3. Composition selon la revendication 1 ou 2, dans laquelle le polysiloxane est le polydiméthylsilo xane.

4. Composition selon l'une des revendications précédentes, dans laquelle la polyoléfine d) représente au moins 5% en poids de la composition, de préférence au moins 50%, de préférence encore au moins 90%.

5. Composition selon l'une des revendications précédentes, dans laquelle la polyoléfine d) est choisie dans le groupe consistant en le polyéthylène, le polypropylène, les copolymères de polyéthylène et de polypropylène et les mélanges de ceux-ci.

6. Composition selon l'une des revendications précédentes, dans laquelle le copolymère bloc présente une structure dibloc A-B dans laquelle A représente le bloc de polyoléfine et un B représente le bloc de polysiloxane.

7. Procédé de fabrication de la composition selon l'une des revendications 1 à 6, comprenant les étapes de :
a) préparation d'un agent compatibilisant par réaction entre :
i) un polysiloxane monofonctionnalisé par un groupement choisi parmi les groupements hydroxyle, vinyle, acrylate, amine, aminoalkyle, mercapto, époxyde, époxyde alicyclique ; et
ii) soit α) une polyoléfine réactive, soit β) une polyoléfine non réactive en mélange avec un peroxyde;
b) mélange de l'agent compatibilisant avec
(i) un polysiloxane fonctionnalisé par des groupements susceptibles de réagir par polymérisation radicalaire ;
(ii) un amorceur de polymérisation radicalaire, activable par rayonnement UV ;
(iii) une polyoléfine.

8. Procédé de fabrication selon la revendication 7, dans lequel la polyoléfine réactive de l'étape a) ii) α) est une polyoléfine greffée par des groupements anhydride maléique.

9. Procédé de fabrication selon la revendication 7, dans lequel dans l'étape a) ii) β) une polyoléfine non greffée est mise en contact avec un peroxyde, de préférence un dialkyle-péroxyde, en particulier le 2,5-dimétyl-2,5-di(tert-butylperoxy)hexane.

10. Procédé de fabrication d'un film comprenant les étapes de :
a) approvisionnement de la composition selon l'une des revendications 1 à 6 ou préparation de ladite composition selon le procédé tel que décrit dans l'une des revendications 7 à 9 ;
b) extrusion de la composition pour former un film;
c) étirement du film ;
d) exposition du film à un rayonnement UV.

11. Procédé de fabrication selon la revendication 10, dans lequel on incorpore à la composition après l'étape a) une polyoléfine.

12. Procédé selon la revendication 10 ou 11, dans lequel les étapes d'extrusion et d'étirement sont effectuées par un procédé d'extrusion gonflage.

13. Procédé selon la revendication 10 ou 11, dans lequel les étapes d'extrusion et d'étirement sont effectuées par un procédé d'extrusion de film à plat.

14. Film susceptible d'être obtenu par le procédé selon l'une des revendications 10 à 13.

15. Etiquette auto-adhésive (1) comprenant une couche support (3) et une couche protectrice (2) comprenant le film selon la revendication 14.

## Patentansprüche

1. Zusammensetzung, umfassend:
a) ein Blockcopolymer, das mindestens einen Block eines Polysiloxans und mindestens einen Block eines Polyolefins umfasst;
b) ein Polysiloxan, das mit Gruppen funktionalisiert ist, die mittels radikalischer Polymerisation reagieren können;
c) einen radikalischen Polymerisationsinitiator, der mittels UV-Strahlung aktivierbar ist;
d) ein Polyolefin.

2. Zusammensetzung nach Anspruch 1, wobei die Gruppen, die mittels radikalischer Polymerisation reagieren können, ausgewählt sind aus Alicyclischen Epoxid, Vinyl und Acrylat Gruppen.

3. Zusammensetzung nach Anspruch 1 oder 2, wobei es sich bei dem Polysiloxan um Polydimethylsiloxan handelt.

4. Zusammensetzung nach einem der vorhergehenden Ansprüche, wobei das Polyolefin d) mindestens 5 Gew.-% der Zusammensetzung, bevorzugt mindestens 50 Gew.-%, noch stärker bevorzugt mindestens 90 Gew.-% der Zusammensetzung ausmacht.

5. Zusammensetzung nach einem der vorhergehenden Ansprüche, wobei das Polyolefin d) ausgewählt ist aus der Gruppe bestehend aus Polyethylen, Polypropylen, Polyethylen-Polypropylen Copolymeren und deren Gemischen.

6. Zusammensetzung nach einem der vorhergehenden Ansprüche, wobei das Blockcopolymer eine Zweiblock-Struktur A-B aufweist, wobei A für den Polyolefin-Block steht und B für den Polysiloxan-Block steht.

7. Verfahren zur Herstellung der Zusammensetzung nach einem der Ansprüche 1 bis 6, das die folgenden Schritte umfasst:
a) Herstellen eines Kompatibilisators durch reagieren:
i) eines Polysiloxans, monofunktionalisiert mit einer Gruppe, ausgewählt aus den Hydroxyl, Vinyl, Acrylat, Amino, Aminoalkyl, Mercapto, Epoxyd, Alicyclischen Epoxid Gruppen; mit
ii) entweder α) einem reaktiven Polyolefin, oder β) einem nicht reaktiven Polyolefin, mit einem Peroxid gemischt;
b) Mischen des Kompatibilisators mit
(i) einem Polysiloxan, das mit Gruppen funktionalisiert ist, die mittels radikalischer Polymerisation reagieren können;
(ii) einem radikalischen Polymerisationsinitiator, der mittels UV-Strahlung aktivierbar ist;
(iii) einem Polyolefin.

8. Verfahren zur Herstellung nach Anspruch 7, wobei es sich bei dem reaktiven Polyolefin aus Schritt a) ii) α) um ein Polyolefin handelt, das mit Maleinsäureanhydridgruppen gepfropft ist.

9. Verfahren zur Herstellung nach Anspruch 7, wobei in Schritt a) ii) β) ein nicht gepfropftes Polyolefin mit einem Peroxid, bevorzugt einem Dialkylperoxid, insbesondere 2,5-Dimetyl-2,5-di(tert-butylperoxy)-hexan, in Kontakt gebracht wird.

10. Verfahren zur Herstellung einer Folie, das die folgenden Schritte umfasst:
a) Bereitstellen der Zusammensetzung nach einem der Ansprüche 1 bis 6 oder Herstellen der Zusammensetzung gemäß dem in einem der Ansprüche 7 bis 9 beschriebenen Verfahren;
b) Extrudieren der Zusammensetzung, um eine Folie zu bilden;
c) Verstrecken der Folie;
d) Behandeln der Folie mit einer UV-Strahlung.

11. Verfahren zur Herstellung nach Anspruch 10, wobei nach Schritt a) ein Polyolefin in die Zusammensetzung integriert wird.

12. Verfahren nach Anspruch 10 oder 11, wobei die Extrusions- und Verstrecken-Schritte mittels eines Blasextrusionsverfahrens durchgeführt werden.

13. Verfahren nach Anspruch 10 oder 11, wobei die Extrusions- und Verstrecken-Schritte mittels eines Flachfolienextrusionsverfahrens durchgeführt werden.

14. Film der mittels des Verfahrens nach einem der Ansprüche 10 bis 13 erhalten werden kann.

15. Selbstklebendes Etikett (1), das eine Trägerschicht (3) und eine Schutzschicht (2) umfasst, die die Folie nach Anspruch 14 enthalt.

## Claims

1. Composition comprising:
a) a block copolymer comprising at least one block of a polysiloxane and at least one block of a polyolefin;
b) a polysiloxane functionalised by groups able to react via radical polymerisation;
c) an initiator of radical polymerisation, activatable by UV radiation;
d) a polyolefin.

2. The composition according to claim 1, wherein the groups able to react via radical polymerisation are selected from among vinyl, acrylate and alicyclic epoxide groups.

3. The composition according to claim 1 or 2, wherein the polysiloxane is polydimethylsiloxane.

4. The composition according to one of the preceding claims, wherein the polyolefin d) represents at least 5 weight % of the composition, preferably at least 50 %, more preferably at last 90 %.

5. The composition according to one of the preceding claims, wherein the polyolefin d) is selected from the group consisting of polyethylene, polypropylene, the copolymers of polyethylene and polypropylene and the mixtures thereof.

6. The composition according to one of the preceding claims, wherein the block copolymer has a diblock A-B structure, wherein A is the polyolefin block and B is the polysiloxane block.

7. A process to produce the composition according to one of claims 1 to 6, the comprising the steps of:
a) preparing a compatibility agent by reaction between:
(i) a polysiloxane mono-functionalised by a group selected from among hydroxyl, vinyl, acrylate, amine, aminoalkyl, mercapto, epoxide, alicyclic epoxide groups; and
(ii) either α) a reactive polyolefin, or β) a non-reactive polyolefin in a mixture with a peroxide;
b) mixing the compatibility agent with:
(i) a polysiloxane functionalised by groups able to react via radical polymerisation;
(ii) an initiator of radical polymerisation activatable by UV radiation;
(iii) a polyolefin.

8. A production process according to claim 7, wherein the reactive polyolefin at step a) ii) α) is a polyolefin grafted by maleic anhydride groups.

9. The production process according to claim 7, wherein at step a) ii) β), a non-grafted polyolefin is contacted with a peroxide, preferably a dialkyl-peroxide, in particular 2,5-dimethyl-2,5-di(tert-butylperoxy)hexane.

10. A process to manufacture a film comprising the steps of:
a) providing the composition according to one of claims 1 to 6, or preparing said composition according to the process such as described in one of claims 7 to 9;
b) extruding the composition to form a film;
c) stretching the film;
d) exposing the film to UV radiation.

11. The manufacturing process according to claim 10, wherein after step a) a polyolefin is incorporated in the composition.

12. The process according to claim 10 or 11, wherein the extrusion and stretching steps are performed by a blown extrusion process.

13. The process according to claim 10 or 11, wherein the extrusion and stretching steps are performed by a flat film extrusion process.

14. Film able to be obtained with the process according to one of claims 10 to 13.

15. Self-adhesive label (1) comprising a backing layer (3) and a protective layer (2) comprising the film according to claim 14.
